## Europäisches Patentamt
## European Patent Office
## Office européen des brevets

(19)

(11) Publication number: **0 087 791**
**B1**

(12)

# EUROPEAN PATENT SPECIFICATION

(45) Date of publication of patent specification: **30.07.86**

(21) Application number: **83101907.0**

(22) Date of filing: **26.02.83**

(51) Int. Cl.⁴: **C 08 J 3/24,** C 08 L 23/34, C 08 L 23/28, C 08 L 27/22, C 08 K 5/14, C 08 K 5/05, C 08 K 3/22

(54) Peroxide curable chlorinated polyolefins.

(30) Priority: **01.03.82 US 353361**

(43) Date of publication of application:
**07.09.83 Bulletin 83/36**

(45) Publication of the grant of the patent:
**30.07.86 Bulletin 86/31**

(84) Designated Contracting States:
**BE CH DE FR GB IT LI NL SE**

(56) References cited:
**DD-A- 96 490**
**DE-B-1 494 165**
**US-A-3 244 774**

(73) Proprietor: **E.I. DU PONT DE NEMOURS AND COMPANY**
**1007 Market Street**
**Wilmington Delaware 19898 (US)**

(72) Inventor: **Honsberg, Wolfgang**
**2401 Lori Lane**
**Wilmington Delaware 19810 (US)**

(74) Representative: **von Kreisler, Alek, Dipl.-Chem.**
**et al**
**Deichmannhaus am Hauptbahnhof**
**D-5000 Köln 1 (DE)**

Courier Press, Leamington Spa, England.

**Description**

Background of the invention

In industry chlorosulfonated polyolefins are cured with sulfur or compounds that release sulfur when heated. Sulfur cures, or more precisely vulcanization, of chlorosulfonated polyolefins often results in adhesion of the rubber to the mold due to sulfur build-up on the mold cavity wall. Also, the sulfurous build-up in the mold cavity can adhere to the rubber article in the mold during vulcanization resulting in formation of discolored areas on the polymer surface. Although peroxide cures of chlorosulfonated polyolefin have been successful commercially they require relatively large amounts of inorganic acid acceptor, for example, magnesium oxide, if satisfactory physical properties are to be obtained. Large amounts of acid acceptor result in the formation of hydrochloric acid and sulfur acids during the curing process and these acids interfere with the peroxide cure. Unfortunately, the high levels of acid acceptors required to promote peroxide cures can detrimentally affect certain properties of the cured elastomer, for example, compound viscosity and water-resistance. However, when lower levels of acid acceptor are used then the compression set of peroxide-cured chlorosulfonated polyolefins is poor thus indicating that a high state of cure has not been attained.

US—A—3,244,774 discloses a process for preparing chlorinated polyethylene by vulcanizing the polymer prepared by a heterogeneous chlorination in an aqueous suspension in the presence of filling agents at a temperature above the agglomeration temperature of the polymer. It is disclosed that thereby acid acceptors can be used in the process. It is furthermore mentioned that crosslinking agents including peroxides, propylene glycol, 2-methyl-2,4-pentane diol and many others can be used. This process, however, does not necessarily ensure that a high state of cure is attained. It is, however, desirable to obtain a high state of cure of chlorinated polyethylene elastomers or chlorosulfonated polyolefin elastomers using lower levels of acid acceptor.

The present invention provides a novel peroxide-curable chlorosulfonated polyolefin elastomer composition or chlorinated polyethylene elastomer composition that reaches a high state of cure by a process in which the chlorinated polyolefins are cured in the presence of certain polyhydroxy alcohols.

Summary of the invention

The present invention provides a chlorinated polyolefin composition having a high state of cure, as indicated by its compression set values. More specifically this invention is directed to a curable chlorinated polyolefin elastomer composition comprising:

(a) a polyolefin selected from the group consisting of chlorinated polyethylene having 20—50% chlorine by weight and chlorosulfonated polyolefin having 20—50% chlorine by weight and 0.2—1.5% sulfur by weight,

(b) a basic metal oxide or hydroxide acid acceptor, and

(c) an organic peroxide curing agent, characterized in that said composition additionally contains

(d) 0.2—10 parts per 100 parts elastomer of at least one aliphatic polyhydroxy alcohol having at least two hydroxyl groups and in which the hydroxyl groups are on carbon atoms in the 1,2 or 1,3 positions relative to each other and said polyhydroxy alcohol has a molecular weight of less than 300.

Furthermore, the invention is directed to a process for curing a chlorinated polyolefin elastomer composition including a polyolefin selected from the group consisting of chlorinated polyethylene having 20—50% chlorine by weight and chlorosulfonated polyolefin having 20—50% chlorine by weight and 0,2—1,5% sulfur by weight comprising:

(a) compounding said polyolefin elastomer, a basic metal oxide or hydroxide acid acceptor, an organic peroxide curing agent, and

(b) heating the resulting mixture to a temperature above the decomposition temperature of the peroxide and below the decomposition temperature of the elastomer until the elastomer is cured, characterized in that 0.2—10 parts per 100 parts elastomer of at least one aliphatic polyhydroxy alcohol having at least two hydroxyl groups in which the hydroxyl groups are in the 1,2 or 1,3 positions relative to each other, and said polyhydroxy alcohol having a molecular weight of less than 300, is added to the chlorinated polyolefin.

Preferably, the polyhydroxy aliphatic alcohol contains 2—6 carbon atoms and the chlorosulfonated polyolefin is chlorosulfonated polyethylene. These elastomers can be used for making hose and belting but are especially useful for jacketing small diameter wire, e.g. automotive ignition wire. The chlorinated polyolefins are cured by compounding the elastomer, the acid acceptor, organic peroxide and about 0.2—10 parts per 100 parts elastomer of at least one polyhydroxy alcohol and heating the resulting mixture to a temperature above the decomposition temperature of the peroxide and below the decomposition temperature of the elastomer until the elastomer is cured.

Detailed description of the invention

The chlorosulfonated polyolefin that is peroxide cured can be any of those well-known elastomers prepared by the reaction of a chlorosulfonating agent, such as a mixture of chlorine and sulfur dioxide gases or sulfuryl chloride, with a saturated hydrocarbon polymer, such as polyethylene, or a copolymer of ethylene with a $C_3$—$C_8$ alpha-olefin. The polyethylene can be either the lower density, high pressure type or

2

the higher density homo- or copolymer type prepared with a coordination catalyst at lower pressure. The ethylene copolymers used for chlorosulfonating can contain up to 10% by weight of $C_3$—$C_8$ comonomers. The number average molecular weight of the chlorosulfonated polyolefin is usually at least 10,000. The chlorosulfonation reaction is controlled to produce a polymer product which contains 20—50 percent by weight chlorine and 0.2—1.5 percent by weight sulfur, the latter being in the form of sulfonyl chloride groups attached to the saturated hydrocarbon chain. Representative polymers of this type are well known and described in, for example, U.S. Patents 2,212,786, 2,982,759 and 3,299,014.

The chlorinated polyethylenes used in this invention have 20—50 percent by weight chlorine, and, therefore, the polymers are elastomeric. The chlorinated polyethylenes used in this invention are well-known commercial products made by reacting chlorine gas with polyethylene having a number average molecular weight greater than 10,000.

The polyhydroxy alcohols used as curing aids in the composition of the present invention are added to the elastomer compositions in amounts of 0.2—10 parts per 100 parts chlorinated polyethylene or chlorosulfonated polyolefin elastomer, and preferably 1—3 parts per 100 parts chlorinated polyethylene or chlorosulfonated polyolefin elastomer. If less than 0.2 parts per 100 parts elastomer of polyhydroxy alcohol is used, no significant effect is seen in the state of cure of the elastomer and large amounts of acid acceptors must be used in such situations to provide a satisfactory degree of cure, and, if more than 10 parts polyhydroxy alcohol is used per 100 parts elastomer, no further significant beneficial effects result. The polyhydroxy alcohols are aliphatic alcohols and contain hydroxyl groups on carbon atoms in the 1,2 or 1,3 positions relative to each other and have molecular weights less than 300. The polyhydroxy alcohols used in the invention can be substituted with various groups such as alkoxy or carboalkoxy radicals, usually having 1—18 carbons atoms in the alkoxy radical. The molecular weight requirements pertain to the polyhydroxy alcohol only and not its equivalent ester- or ether-forming derivatives. Substitution of such radicals on the polyhydroxy alcohol does not interfere with peroxide curing. Preferably the aliphatic polyhydroxy alcohols contain 2 to 6 carbon atoms. Polyhydroxy alcohols that can be used include 2,2-dimethyl-1,3-propanediol, ethylene glycol, glycerol, 1,2-propanediol, dipentaerythritol, and pentaery-thritol, available as PE-200, a technical grade sold by Hercules, Inc., pentaerythritol mono- and distearate, mono- and dilaurate, mono- and dioleate and mono- and dipalmitate.

Organic peroxides used to cure elastomers can be used in this invention to cure the chlorinated polyethylene or chlorosulfonated polyolefin elastomers. Such peroxide curing agents are well known in the art and include:

2,5-dimethyl-2,5-di-(t-butylperoxy)hexyne-3; 2,5-dimethyl-2,5-di-(t-butylperoxy)hexane; di-t-butyl-peroxide;. 2,5-di-(t-amylperoxy)-2,5-dimethyl-hexane; 2,5-di(t-butylperoxy)-2,5-diphenyl hexane; 2,5-di(t-butylperoxy)-2,2,5-dicyclohexyl hexane; bis(alpha-methylbenzyl)peroxide, also called dicumyl peroxide; and dimethyl-benzyl-t-butyl peroxide; and bis-(t-butylperoxy)diisopropylbenzene. Dicumyl peroxide is preferred because of its ready availability and cost. Generally, the amount of peroxide curing agent added to the chlorinated polyolefin elastomer is 2 to 8 parts peroxide per 100 parts elastomer and, preferably 3 to 4 parts per 100 parts elastomer.

A conventional basic metal oxide or hydroxide acid acceptor is added to the chlorinated polyethylene or chlorosulfonated polyolefin compositions that are to be cured. The acid acceptor has a stabilizing effect on the composition because hydrochloric acid (and sulfur acids in the case of chlorosulfonated polyethylene) that is generated during curing is substantially neutralized by the inorganic metal oxides or hydroxides. The metal oxides and hydroxides that are generally used are those of magnesium, calcium or lead. Magnesium oxide, calcium oxide, lead oxide and calcium hydroxide are preferred, especially magnesium oxide. The amount of acid acceptor varies depending on the particular polyhydroxy alcohol that is used in the composition and the chlorinated polyolefin to be cured. Generally, only 0.025—0.25 moles of acid acceptor per 100 parts chlorosulfonated polyolefin is added to the composition and preferably 0.05—0.15 moles of acid acceptor per 100 parts of chlorosulfonated polyolefin is added to the composition to obtain a satisfactory cure. When chlorinated polyethylene is cured, generally, the amount of acid acceptor used is 0.01—0.1 moles per 100 parts of chlorinated polyethylene, preferably 0.025—0.075 moles per 100 parts chlorinated polyethylene. As a rule the higher the amount of polyhydroxy alcohol added to the composition, the lower the amount of acid acceptor which can be used.

Optionally, in addition to the peroxide curing agent a conventional coagent can be present in the elastomer composition, generally in amounts up to 6 parts per 100 parts chlorinated polyolefins, usually 1 to 4 parts per 100 parts chlorinated polyolefin elastomer is adequate. These coagents are polyunsaturated compounds that cooperate with the peroxide curing agent to more efficiently use the peroxide. Generally, the coagents are organic compounds containing at least one, preferably two or more, aliphatic unsaturated groups, preferably allyl. Representative coagents that can be used include triallyl cyanurate, diallyl maleate and diallyl terephthalate.

The chlorinated polyethylene or chlorosulfonated polyolefin composition can, and usually does, contain conventional fillers, such as carbon black, calcium carbonate, clay, silica, hydrated alumina and the like; pigments such as titanium dioxide; and stabilizers such as dialkylthiodipropionate and thiodiethylene bis[3,5-di-t-butyl-4-hydroxyhydrocinnamate], in varying amounts.

The invention is illustrated by the following examples in which the proportions are given in parts by weight unless otherwise indicated.

Examples 1—17

One hundred parts of curable chlorosulfonated polyethylene containing, by weight, 35% Cl, 1% S is compounded on a two-roll mill with the following ingredients charged to the mill: 40 parts SRF Black, 3.2 parts dicumyl peroxide, 4 parts triallylcyanurate and metal oxide or hydroxide acid acceptor and polyhydroxy alcohol as indicated in the table below. The temperature of the mix during compounding is held below about 60°C and the ingredients are uniformly mixed in about 4 minutes. The compounded stock is removed from the mill, cured for 30 minutes at 160°C, and tested as indicated. The test data show that the peroxide-cured chlorosulfonated polyethylene has excellent compression set and other satisfactory physical properties thus indicating a tight cure.

TABLE

| Ingredients | Parts per 100 rubber | | | | |
|---|---|---|---|---|---|
| | 1 | 2 | 3 | 4 | 5 |
| Magnesium Oxide | $5^a$ | $5^a$ | $2.5^a$ | $2.5^a$ | $5^a$ |
| Magnesium Hydroxide | | | | | |
| Calcium oxide | | | | | |
| Calcium hydroxide | | | | | |
| Lead oxide | | | | | |
| Pentaerythritol (PE-200) | 3 | | 2 | 3 | 1 |
| 2,2-Dimethyl-1,3-propanediol | | 4.6 | | | |
| Ethylene glycol | | | | | |
| Glycerol | | | | | |
| Mooney Scorch[1] Original Minimum | 25 | 24 | 20 | 21.5 | 24 |
| 10 Point Rise | >30 | 30 | >30 | >30 | >30 |
| Stress-strain-properties (Cured 30 min/160°C) $M_{100}(MPa)^2$ | 13.4 | 3.1 | 2.2 | 3.4 | 2.2 |
| $M_{200}(MPa)^2$ | — | 10.3 | 5.2 | 10.0 | 5.3 |
| $T_B$ $(MPa)^2$ | 21.7 | 19.0 | 13.6 | 17.9 | 12.4 |
| $E_B$ (%) | 140 | 290 | 535 | 335 | 565 |
| Compression set[3] % (22 hrs/70°C) | 13.5 | 27.5 | 35.5 | 22 | 44.5 |
| % (22 hrs/121°C) | 26 | 45 | 72.5 | 51 | 82.5 |

4

# 0 087 791

TABLE (Cont'd)

| Ingredients | Parts per 100 rubber | | | | |
|---|---|---|---|---|---|
| | 6 | 7 | 8 | 9 | 10 |
| Magnesium Oxide | 5[a] | 10[a] | 10[a] | 10[a] | |
| Magnesium Hydroxide | | | | | 7.2[b] |
| Calcium oxide | | | | | |
| Calcium hydroxide | | | | | |
| Lead oxide | | | | | |
| Pentaerythritol (PE-200) | 2 | 1 | 2 | 3 | 2 |
| 2,2-Dimethyl-1,3-propanediol | | | | | |
| Ethylene glycol | | | | | |
| Glycerol | | | | | |
| Mooney Scorch[1] Original Minimum | 23 | 23 | 26 | 26 | |
| 10 Point Rise | >30 | >30 | >30 | >30 | |
| Stress-strain-properties (Cured 30 min/160°C) $M_{100}$(MPa)[2] | 6.9 | 6.9 | 16.9 | 19.3 | 8.6 |
| $M_{200}$(MPa)[2] | 21.0 | 20.3 | — | — | — |
| $T_B$ (MPa)[2] | 24.5 | 23.8 | 23.1 | 23.9 | 23.4 |
| $E_B$ (%) | 230 | 230 | 135 | 135 | 230 |
| Compression set[3] % (22 hrs/70°C) | 16 | 16.5 | 10 | 8 | 17 |
| % (22 hrs/121°C) | 38.5 | 38.5 | 29 | 29 | |

5

TABLE (Cont'd)

|  | | | Parts per 100 rubber | | | | |
|---|---|---|---|---|---|---|---|
| Ingredients | 11 | 12 | 13 | 14 | 15 | 16 | 17 |
| Magnesium Oxide | | | 5 | 5 | | | |
| Magnesium Hydroxide | | | | | | | |
| Calcium oxide | 7.1[c] | | | | 7.1[c] | | |
| Calcium hydroxide | | 9.2[d] | | | | | |
| Lead oxide | | | | | | 10[e] | 20[e] |
| Pentaerythritol (PE-200) | 4 | 2 | | | | | |
| 2,2-Dimethyl-1,3-propanediol | | | | | | | |
| Ethylene glycol | | | 2 | | | | 6 |
| Glycerol | | | | 2 | 4 | 4 | |
| Mooney Scorch[1] Original Minimum | | | | | | | |
| 10 Point Rise | | | | | | | |
| Stress-strain-properties (Cured 30 min/160°C) $M_{100}$(MPa)[2] | 1.7 | 10.0 | 15.2 | 15.2 | 13.8 | 12.7 | 9.6 |
| $M_{200}$(MPa)[2] | 6.5 | — | — | — | 23.5 | — | — |
| $T_B$ (MPa)[2] | 8.6 | 20.7 | 26.2 | 24.8 | 24.2 | 25.5 | 23.8 |
| $E_B$ (%) | 780 | 150 | 140 | 140 | 145 | 1170 | 190 |
| Compression set[3] % (22 hrs/70°C) | 80 | 9 | 11 | 10 | 28 | 13 | 23 |
| % (22 hrs/121°C) | | | | | | | |

[1] ASTM D-1646
[2] ASTM D-412
[3] ASTM D-395

[a.] 2.5, 5 and 10 parts MgO are equivalent to 0.06, 0.12 and 0.25 moles MgO respectively.
[b.] Equivalent to 0.12 moles Mg(OH)$_2$
[c.] Equivalent to 0.13 moles CaO
[d.] Equivalent to 0.12 moles Ca(OH)$_2$
[e.] 10 and 20 parts FbO are equivalent to 0.045 and 0.09 moles PbO, respectively.

Examples 18—21

One hundred parts of curable chlorinated polyethylene elastomer containing 35% Cl by weight is compounded on a two-roll mill with the following ingredients charged to the mill: 40 parts SRF Black, 2.4 parts dicumyl peroxide, 1 part triallylcyanurate and metal oxide or hydroxide acid acceptor and polyhydroxy alcohol as indicated in the table below. The temperature of the mix during compounding is held below about 60°C and the ingredients are uniformly mixed in about 4 minutes. The compounded stock is removed from the mill, cured for 30 minutes at 160°C and tested as indicated. The test data show that the peroxide cured chlorinated polyethylene has excellent compression set and other satisfactory physical properties thus indicating that a high degree of cure was attained.

TABLE

| | 18 | 19 | 20 | 21 |
|---|---|---|---|---|
| Magnesium hydroxide | — | — | 1.4[a] | 0.7[a] |
| Calcium Oxide | 1.4[b] | 1.5[b] | — | — |
| Pentaerythritol (FE-200) | 2 | — | 1 | 2 |
| Glycerol | — | 1 | — | — |
| Stress-strain-properties (Cured 30 min/160°C) $M_{100}$(MPa)[1] | 7.6 | 5.2 | 5.9 | 5.2 |
| $M_{200}$(MPa)[1] | 19.0 | 12.7 | 14.3 | 17.6 |
| $T_B$ (MPa)[1] | 21.4 | 19.3 | 18.7 | 22.8 |
| $E_B$ (%) | 235 | 295 | 265 | 245 |
| Compression set[2] % (22 hrs/70°C) | 19 | 26 | 21 | 13 |

[1.] ASTM D-412
[2.] ASTM D-395

[a.] 0.7 and 1.4 parts $Mg(OH)_2$ are equivalent to 0.012 and 0.024 moles $Mg(OH)_2$, respectively.
[b.] 1.4 and 1.5 parts CaO are equivalent to 0.025 and 0.027 moles CaO respectively.

Examples 22—28

The procedure described above in examples 18—21 is repeated except that magnesium oxide is used as the acid acceptor, and ethylene glycol and glycerol are used in the amounts indicated as the polyhydroxy alcohols.

| | Comparative | Example 22 | 23 | 24 |
|---|---|---|---|---|
| Magnesium oxide (Maglite D) | 1[a] | 1[a] | 1[a] | 1[a] |
| Pentaerythritol (PE-200) | — | 0.5 | 1 | 2 |
| Glycerol | — | — | — | — |
| Ethylene glycol | — | — | — | — |
| Stress-strain-properties (Cured 30 min at 160°C) Original $M_{100}$(MPa)[1] | 4.5 | 5.9 | 6.3 | 7.4 |
| $M_{200}$(MPa)[1] | 9.6 | 14.1 | 15.5 | 17.9 |
| $T_B$ (MPa)[1] | 16.5 | 17.9 | 19.3 | 20.7 |
| $E_B$ (%) | 345 | 245 | 245 | 235 |
| Compression set[2] % (22 hrs. at 70°C) | 34 | 26 | 22 | 20 |

# 0 087 791

TABLE (Cont'd)

| Comparative | 25 | 26 | 27 | 28 |
|---|---|---|---|---|
| Magnesium oxide (Maglite D) | $1^a$ | $1^a$ | $1^a$ | $1^a$ |
| Pentaerythritol (PE-200) | — | — | — | — |
| Glycerol | 0.5 | 1 | 2 | — |
| Ethylene glycol | — | — | — | 1 |
| Stress-strain-properties (Cured 30 min at 160°C) Original | | | | |
| $M_{100}(MPa)^1$ | 5.6 | 6.3 | 7.1 | 6.5 |
| $M_{200}(MPa)^1$ | 13.8 | 16.0 | 17.9 | 15.9 |
| $T_B$ $(MPa)^1$ | 19.3 | 20.3 | 20.3 | 20.0 |
| $E_B$ (%) | 270 | 250 | 225 | 260 |
| Compression set$^2$ % (22 hrs/70°C) | 23 | 24 | 19 | 22 |

[1] ASTM D-412
[2] ASTM D-395
[a] Equivalent to 0.025 moles MgO

## Claims

1. A curable chlorinated polyolefin elastomer composition comprising:

(a) a polyolefin selected from the group consisting of chlorinated polyethylene having 20—50% chlorine by weight and chlorosulfonated polyolefin having 20—50% chlorine by weight and 0.2—1.5% sulfur by weight,

(b) a basic metal oxide or hydroxide acid acceptor, and

(c) an organic peroxide curing agent, characterized in that said composition additionally contains

(d) 0.2—10 parts per 100 parts elastomer of at least one aliphatic polyhydroxy alcohol having at least two hydroxyl groups and in which the hydroxyl groups are on carbon atoms in the 1,2 or 1,3 positions relative to each other and said polyhydroxy alcohol has a molecular weight of less than 300.

2. A composition of claim 1 where the chlorinated polyolefin is chlorosulfonated polyolefin and the basic metal oxide or hydroxide acid acceptor is present in the composition in an amount of 0.025—0.25 moles acid acceptor per 100 parts chlorosulfonated polyolefin.

3. A composition of claim 1 where the chlorinated polyolefin is chlorinated polyethylene and the basic metal oxide or hydroxide acid acceptor is present in the composition in an amount of 0.01—0.1 moles per 100 parts chlorinated polyethylene.

4. A composition of claims 1, 2 or 3 where the polyhydroxy alcohol contains 2—6 carbon atoms.

5. A composition of claims 1, 2 or 3 where the acid acceptor is an oxide or hydroxide of magnesium.

6. A composition of claims 1 or 2 where the chlorosulfonated polyolefin elastomer is chlorosulfonated polyethylene or chlorinated polyethylene.

7. A composition of claims 1 to 6, where the polyhydroxy alcohol is selected from ethylene glycol, glycerol, and pentaerythriol.

8. A process for curing a chlorinated polyolefin elastomer composition including a polyolefin selected from the group consisting of chlorinated polyethylene having 20—50% chlorine by weight and chlorosulfonated polyolefin having 20—50% chlorine by weight and 0,2—1,5% sulfur by weight comprising:

(a) compounding said polyolefin elastomer, a basic metal oxide or hydroxide acid acceptor, an organic peroxide curing agent, and

(b) heating the resulting mixture to a temperature above the decomposition temperature of the peroxide and below the decomposition temperature of the elastomer until the elastomer is cured, characterized in that 0.2—10 parts per 100 parts elastomer of at least one aliphatic polyhydroxy alcohol having at least two hydroxyl groups in which the hydroxyl groups are in the 1,2 or 1,3 positions relative to each other, and said polyhydroxy alcohol having a molecular weight of less than 300, is added to the chlorinated polyolefin.

8

**0 087 791**

9. A process of claim 8, wherein 0.025—0.25 moles, preferably 0.01—0.1 moles of acid acceptor per 100 parts chlorosulfonated polyolefin are added to the mixture.

10. A process of claims 8 and 9 where the polyhydroxy alcohol contains 2- 6 carbon atoms.

11. A process of claims 8—10 where the acid acceptor is an oxide or hydroxide of magnesium.

12. A process of claims 8—11 where the chlorosulfonated polyolefin elastomer is chlorosulfonated polyethylene or chlorinated polyethylene.

13. A process of claims 8 to 12 where the polyhydroxy alcohol is selected from ethylene glycol, glycerol, and pentarythrithol.

## Patentansprüche

1. Härtbare Elastomer-Zusammensetzung aus chloriertem Polyolefin, umfassend:

(a) ein Polyolefin ausgewählt aus der aus chloriertem Polyethylen mit 20 bis 50 Gew.-% Chlor und chlorosulfoniertem Polyolefin mit 20 bis 50 Gew.-% Chlor und 0,2 bis 1,5 Gew.-% Schwefel bestehenden Gruppe,

(b) einen basischen Metalloxid- oder Hydroxid-Säure-acceptor und

(c) ein organisches Peroxid-Härtungsmittel, dadurch gekennzeichnet, daß die Zusammensetzung zusätzlich

(d) 0,2 bis 10 Teile pro 100 Teile Elastomer wenigstens eines aliphatischen Polyhydroxyalkohols mit wenigstens zwei Hydroxyl-Gruppen enthält, wobei die Hydroxyl-Gruppen sich an Kohlenstoff-Atomen in der 1,2- oder 1,3-Stellung relativ zueinander befinden und der Polyhydroxyalkohol ein Molekulargewicht von weniger als 300 besitzt.

2. Zusammensetzung nach Anspruch 1, dadurch gekennzeichnet, daß das chlorierte Polyolefin chlorosulfoniertes Polyolefin ist und der basische Metalloxid- oder Hydroxid-Säureacceptor in der Zusammensetzung in einer Menge von 0,025 bis 0,25 mol Säureacceptor auf 100 Teile chlorosulfoniertes Polyolefin vorliegt.

3. Zusammensetzung nach Anspruch 1, dadurch gekennzeichnet, daß das chlorierte Polyolefin chloriertes Polyethylen ist und der basische Metalloxid- oder Hydroxid-Säureacceptor in der Zusammensetzung in einer Menge von 0,01 bis 0,1 mol Säureacceptor auf 100 Teile chloriertes Polyethylen vorliegt.

4. Zusammensetzung nach Ansprüchen 1, 2 oder 3, dadurch gekennzeichnet, daß der Polyhydroxyalkohol 2 bis 6 Kohlenstoff-Atome enthält.

5. Zusammensetzung nach Ansprüchen 1, 2 oder 3, dadurch gekennzeichnet, daß der Säureacceptor ein Oxid oder Hydroxid des Magnesiums ist.

6. Zusammensetzung nach Ansprüchen 1 oder 2, dadurch gekennzeichnet, daß das chlorosulfonierte Polyolefin-Elastomer chlorosulfoniertes Polyethylen oder chloriertes Polyethylen ist.

7. Zusammensetzung nach Ansprüchen 1 bis 6, dadurch gekennzeichnet, daß der Polyhydroxyalkohol aus Ethylenglycol, Glycerin und Pentaerythrit ausgewählt ist.

8. Verfahren zur Härtung einer Elastomer-Zusammensetzung aus chloriertem Polyolefin, die ein Polyolefin ausgewählt aus der aus chloriertem Polyethylen mit 20 bis 50 Gew.-% Chlor und chlorosulfoniertem Polyolefin mit 20 bis 50 Gew.-% Chlor und 0,2 bis 1,5 Gew.-% Schwefel bestehenden Gruppe enthält, umfassend

(a) das Compoundieren des Polyolefin-Elastomers, eines basischen Metalloxid- oder Hydroxid-Säureacceptors und eines organisches Peroxid-Härtungsmittels und

(b) das Erhitzen der resultierenden Mischung auf eine Temperatur oberhalb der Zersetzungtemperatur des Peroxids und unterhalb der Zersetzungtemperatur des Elastomers, bis das Elastomer gehärtet ist, dadurch gekennzeichnet, daß dem chlorierten Polyolefin 0,2 bis 10 Teile pro 100 Teile Elastomer wenigstens eines aliphatischen Polyhydroxyalkohols mit wenigstens zwei Hydroxyl-Gruppen zugesetzt werden, wobei die Hydroxyl-Gruppen sich an Kohlenstoff-Atomen in der 1,2- oder 1,3-Stellung relativ zueinander befinden und der Polyhydroxyalkohol ein Molekulargewicht von weniger als 300 besitzt.

9. Verfahren nach Anspruch 8, dadurch gekennzeichnet, daß 0,025 bis 0,25 mol, vorzugsweise 0,01 bis 0,1 mol, des Säureacceptors auf 100 Teile des chlorosulfonierten Polyolefins zu der Mischung hinzugefügt werden.

10. Verfarhen nach Ansprüchen 8 und 9, dadurch gekennzeichnet, daß der Polyhydroxyalkohol 2 bis 6 Kohlenstoff-Atome enthält.

11. Verfahren nach Ansprüchen 8 bis 10, dadurch gekennzeichnet, daß der Säureacceptor ein Oxid oder Hydroxid des Magnesiums ist.

12. Verfahren nach Ansprüchen 8 bis 11, dadurch gekennzeichnet, daß das chlorosulfonierte Polyolefin-Elastomer chlorosulfoniertes Polyethylen oder chloriertes Polyethylen ist.

13. Verfahren nach Anspruchen 8 bis 12, dadurch gekennzeichnet, daß der Polyhydroxyalkohol aus Ethylenglycol, Glycerin und Pentaerythrit ausgewählt ist.

## Revendications

1. Une composition d'élastomère de polyoléfine chlorée durcissable comprenant:

(a) une polyoléfine choisie dans le groupe comprenant le polyéthylène chloré ayant 20—50% de chlore

9

en poids, et une polyoléfine chlorosulfonée ayant 20—50% de chlore en poids et 0,2—1,5% de soufre en poids,

(b) un accepteur d'acide du type oxyde ou hydroxyde métallique basique, et

(c) un agent de durcissement du type peroxyde organique, caractérisée en ce que ladite composition contient de plus

(d) 0,2—10 parties, pour 100 parties d'élastomère, d'au moins un alcool polyhydroxylique aliphatique ayant au moins deux groupes hydroxyle et dans lequel les groupes hydroxyle sont située sur les atomes de carbone dans les positions 1,2 ou 1,3 les une par rapport aux autres et ledit alcool polyhydroxylique a un poids moléculaire inférieur à 300.

2. Une composition selon la revendication 1, dans laquelle la polyoléfine chlorée est une polyoléfine chlorosulfonée et l'accepteur d'acide du type oxyde ou hydroxyde métallique basique est présent dans la composition en une quantité de 0,025—0,25 mole d'accepteur d'acide pour 100 parties de polyoléfine chlorosulfonée.

3. Une composition selon la revendication 1, dans laquelle la polyoléfine chlorée est du polyéthylène chloré et l'accepteur d'acide du type oxyde ou hydroxyde métallique basique est présent dans la composition en une quantité de 0,01—0,1 mole pour 100 parties de polyéthylène chloré.

4. Une composition selon les revendications 1, 2 ou 3, dans laquelle l'alcool polyhydroxylique contient 2—6 atomes de carbone.

5. Une composition sèlon les revendications 1, 2 ou 3, dans laquelle l'accepteur d'acide est un oxyde ou hydroxyde de magnésium.

6. Une composition selon les revendications 1 ou 2, dans laquelle l'élastomère de ·polyoléfine chlorosulfonée est le polyéthylène chlorosulfoné ou le polyéthylène chloré.

7. Une composition selon les revendications 1 à 6, dans laquelle l'alcool polyhydroxylique est choisi entre l'éthylène-glycol, le glycérol et le pentaérythritol.

8. Un procédé pour durcir une composition d'élastomère de polyoléfine chlorée comprenant une polyoléfine choisie dans le groupe comprenant le polyéthylène chloré ayant 20—50% de chlore en poids et une polyoléfine chlorosulfonée ayant 20—50% de chlore en poids et 0,2—1,5% de soufre en poids, consistant:

(a) à mélanger ledit élastomère de polyoléfine, un accepteur d'acide du type oxyde ou hydroxyde métallique basique, un agent de durcissement du type peroxyde organique, et

(b) à chauffer le mélange résultant jusqu'à une température supérieure à la température de décomposition du peroxyde et inférieure à la température de décomposition de l'élastomère jusqu'à ce que l'élastomère soit durci, caractérisé en ce qu'on ajoute à la polyoléfine chlorée 0,2—10 parties, pour 100 parties d'élastomère, d'au moins un alcool polyhydroxylique aliphatique ayant au moins deux groupes hydroxyle dans lequel les groupes hydroxyle sont dans les positions 1,2 ou 1,3 les un par rapport aux autres, et ledit alcool polyhydroxylique ayant un poids moléculaire inférieur à 300.

9. Un procédé selon la revendication 8, dans lequel on ajoute au mélange 0,02—0,25 mole, de préférence 0,01—0,1 mole, d'accepteur d'acide pour 100 parties de polyoléfine chlorosulfonée.

10. Une procédé selon les revendications 8 et 9, dans lequel l'alcool polyhydroxylique contient 2—6 atomes de carbone.

11. Un procédé selon les revendications 8 à 10, dans lequel l'accepteur d'acide est un oxyde ou hydroxyde de magnésium.

12. Un procédé selon les revendications 8 à 11, dans lequel l'élastomère de polyoléfine chlorosulfonée est le polyéthylène chlorosulfoné ou le polyéthylène chloré.

13. Un procédé selon les revendications 8 à 12, dans lequel l'alcool polyhydroxylique est choisi entre l'éthylène-glycol, le glycérol et le pentaérythritol.